# EUROPÄISCHE PATENTSCHRIFT

(11) **EP 1 915 254 B1**
(45) Veröffentlichungstag und Bekanntmachung des Hinweises auf die Patenterteilung: **25.07.2012**
(21) Anmeldenummer: 06762991.5
(22) Anmeldetag: 05.08.2006
(51) Int. Cl.: B32B 27/34, A22C 13/00

(54) **MEHRSCHICHTIGE NAHRUNGSMITTELHÜLLE MIT MINDESTENS EINER SCHICHT AUF BASIS EINES POLYESTER/POLYAMID-GEMISCHES**
MULTI-LAYERED FOOD CASING COMPRISING AT LEAST ONE LAYER BASED ON A POLYESTER/POLYAMIDE-MIXTURE
ENVELOPPE ALIMENTAIRE MULTICOUCHE COMPRENANT AU MOINS UNE COUCHE A BASE D'UN MELANGE POLYESTER/POLYAMIDE

(30) Priorität: 08.08.2005 DE 102005037275
(43) Veröffentlichungstag der Anmeldung: 30.04.2008
(73) Patentinhaber: Kalle GmbH, 65203 Wiesbaden (DE)
(72) Erfinder: DELIUS, Ulrich, 60529 Frankfurt (DE); STENGER, Karl, 65385 Rüdesheim (DE)
(74) Vertreter: Plate, Jürgen
(86) Internationale Anmeldenummer: PCT/EP2006/007771
(87) Internationale Veröffentlichungsnummer: WO 2007/017215

(56) Entgegenhaltungen:
- EP-A- 0 325 151
- EP-A- 0 530 549
- EP-A- 0 758 527
- WO-A-99/07227
- DE-A1- 3 436 682
- DE-A1- 4 339 337
- DE-A1- 10 254 172

## Beschreibung

Die Erfindung betrifft eine mindestens fünfschichtige, biaxial verstreckte, schlauchförmige Nahrungsmittelhülle mit mindestens einer Schichtauf Basis von thermoplastischem Polyester sowie deren Verwendung als künstliche Wursthülle.

Schlauchförmige Kunststoffhüllen werden überwiegend bei der Herstellung von Koch- und Brühwürsten verwendet. Bekannt ist beispielsweise eine einschichtige, biaxial orientierte Hülle aus 30 bis 90 Gewichtsteilen Homo- oder Copolyamid und 70 bis 10 Gewichtsteilen Polyethylenterephthalat und oder einem Copolyester mit Einheiten aus Terephthalsäure, Isophthalsäune und Ethylenglykol (DE-A 34 36 682 = US 4 659 599). Anstelle von einschichtigen Hüllen werden heute überwiegend mehrschichtige Hüllen eingesetzt. Diese haben häufig einen 3- bis 5-schichtigen Aufbau, wobei in der Regel eine oder zwei Schichten aus aliphatischem Polyamid und eine oder mehrere Schichten aus polyolefinischen Werkstoffen mit wasserdampfsperrendem Charakter bestehen. So ist in der DE-A102 27 580 eine mindestens 6-schichtige, bevorzugt mindestens 7-schichtige schlauchförmige Nahrungsmittelhülle offenbart, in dereine Schicht EVOH enthält. In einer Ausführungsform der 7-schichtigen Hülle enthält die äußere Schicht zudem Polyethylenterephthalat (PET). Konkrete Angaben zu dieser Ausführungsform fehlen jedoch, in der DE-A 102 54 172 A1 ist eine mindestens 5-schichtige Hülle offenbart, in der mindestens eine Schicht Polyvinylalkohol (PVA) enthält. Dazu zählt auch eine 7-schichtige schlauchformige Nahrungsmittelhülle, bei der die äußere Schicht PET enthält. Details und Angaben zu konkreten Ausführungsformen dazu fehlen auch hier.

In der EP 0 758 527 A1 ist eine biaxial orientierte, mindestens 4-schichtige Nahrungsmittelhülle offenbart, auf deren Innen- und Außenseite sich jeweils eine Schicht überwiegend aus aliphatischem Polyamid befindet. Dazwischen liegt mindestens eine Schicht, die wasserdampfsperrend wirkt und polyolefinischen Charakter aufweist, und mindestens eine weitere Schicht, die sauerstoffsperrend wirkt und überwiegend aus Ethylen/Vinylalkohol(EVOH)-Copolymeren besteht Gemäß Anspruch 3 der EP-A können die überwiegend aus aliphatischem Polyamid bestehenden Schichten abgemischt sein mit anderen Polymeren, darunter auch (Co)Polyestern. Die (Co)Polyester sind in diesem Fall nur in untergeordneter Menge in den Polyamid-Schichten enthalten.

Bei der Herstellung von Koch- und Brühwurst wird zunächst portionierte Wurstmasse in das Schlauchmaterial eingefüllt und die gebildete Abfüllung an den Enden mit Metallclips verschlossen. Die gebildeten Würste werden durch Erhitzen auf mindestens 76°C Kerntemperatur, teilweise auf bis zu 130°C, gegart bzw. sterilisiert,

Eine wesentliche Anforderung bei diesen Anwendungen ist eine ausreichende mechanische Festigkeit des Hüllenmaterials auch während der obengenannten Wärmebehandlung. Unzureichende Festigkeit kann sich in einer birnenförmigen Verformung der hängenden Würste, Reißen der Hülle unterhalb der Aufhängeposition oder auch durch Platzen während der beim Erhitzen stattfindenden thermischen Expansion des Füllgutes niederschlagen.

Bei den bisher bekannten Kunststoffhüllen wird die erforderliche Festigkeit durch Schichtstrukturen erreicht, die überwiegend (d.h. zu mehr als 50 Gew.-%) aus mechanisch relativ festen und gut temperaturbeständigen aliphatischen Polyamiden bestehen bzw. bei denen die Summe der Schichten aus überwiegend aliphatischem Polyamid mehr als 50% der Folien-Gesamtdicke ausmacht. Außerdem werden die polyamidhaltigen Hüllen während der Herstellung meist biaxial streckorientiert. Die Verstreckung führt beim Polyamid zu erheblich erhöhter spezifischer Reißfestigkeit und verbessert zudem die Formstabilität (Rückstellelastizität) der Hülle unter der Gewichtsbelastung durch das Füllgut.

Ein anhaltender Druck auf die Verkaufspreise bei Kunststoff-Wursthüllen zwingt deren Hersteller zunehmend, nach Möglichkeiten zur Senkung der Materialkosten zu suchen. So wurde u.a. versucht, durch einfaches Reduzieren der Hüllen-Wandstärke Material einzusparen. Spätestens bei Würsten mit größeren Kalibern bzw. mit Füllgewichten von mehr als 1 kg schlägt sich die niedrigere Wandstärke jedoch in unzureichender Festigkeit nieder, was sich insbesondere durch eine deutliche birnenförmige Verformung während des Garprozesses äußert.

Eine Wandstärkenreduzierung ist demgemäß nur sinnvoll, wenn es gelingt, die spezifische Festigkeit der Hüllenstrukturzu erhöhen und dabei die Wasserdampf und Sauerstoff-Barriereeigenschaften der bisher üblichen Hüllen mit höherer Wandstärke zumindest aufrecht zu erhalten.

Es stellte sich somit die Aufgabe, eine Nahrungsmittelhülle auf Basis preiswerter thermoplastischer Werkstoffe (vergleichbar aliphatischem Polyamid) bereitzustellen, deren Folienstruktur eine erhöhte spezifische Festigkeit beisitzt, die auch im Temperaturbereich 80 bis 130 °C größtenteils erhalten bleibt. Bei geringerer Wandstärke (20 bis 40 µm) soll die Hülle noch problemlos bei der Herstellung von Koch- und Brühwurst einsetzbar sein und dabei alle an eine Nahrungsmittelhülle gestellten Anforderungen in ausreichendem Maße erfüllen. Insbesondere soll sie eine auch für oxidationsempfindliche Nahrungsmittel, wie Leberwurstbrät, ausreichendende Barrierewirkung für Sauerstoff und Wasserdampf bieten.

Gelöst wurde die Aufgabe mit einer coextrudierten, biaxial streckorientierten, mindestens 5-schichtigen, schlauchförmigen Hülle, wobei eine der Schichten überwiegend aus einem Polyterephthalsäureester besteht, der mit einem teilaromatischen Polyamid oder Copolyamid (im folgenden als "(Co-)Polyamid" bezeichnet) abgemischt ist.

Gegenstand der vorliegenden Erfindung ist demgemäß eine biaxial orientierte, mindestens 5-schichtige Nahrungsmittelhülle mit mindestens einer Schicht auf Basis von Polyester, die dadurch gekennzeichnet ist, daß die Schicht auf Basis von Polyester 15 bis 49 Gew.-% an teilaromatischem (Co-)Polyamid umfaßt. Die Nahrungsmittelhülle ist vorzugsweise schlauchförmig, besonders bevorzugt darüber hinaus auch nahtlos.

Unter der Bezeichnung "Polyester" sollen im Zusammenhang mit der vorliegenden Erfindung vor allem thermoplastische Polykondensate aus aromatischen Dicarbonsäuren und aliphatischen oder cycloaliphatischen Diolen verstanden werden. Ein untergeordneter Teil der aromatischen Dicarbonsäuren kann durch aliphatische und/oder cycloaliphatische Dicarbonsäuren ersetzt sein. Bevorzugt sind Polyester aus Terephthalsäure und Alkylenglykolen, wie Ethylenglykol, 1,2-Propandiol, 1,4-Butandiol, Diethylenglykol oder Polyetliylenglykol. "Polyester" schließt auch Copolyester mit mehr als 3 verschiedenen Monomereinheiten ein, in denen mehrere verschiedene Dicarbonsäure-Einheiten und/oder mehrere verschiedene Diol-Einheiten vorhanden sind. Das sind beispielsweise Polymere, in denen die Terephthalsäure-Einheiten teilweise durch Einheiten aus anderen Dicarbonsäuren, wie Isophthalsäure oder Cyclohexandicarbonsäure, ersetzt sind. Derartige Polyester, speziell Homopolyester aus Terephthalsäure und Ethylenglykol (allgemein als "PET" bezeichnet) sind als Verpackungswerkstoffe für Folien und Flaschen bereits weit verbreitet. Aufgrund ihrer hohen Schmelzpunkte von etwa 260°C werden sie insbesondere dort verwendet, wo kurzzeitig hohe Temperaturbelastungen auftreten. Biaxial streckorientiertes PET zeichnet sich durch sehr hohe mechanische Festigkeit aus, so daß die damit hergestellten Verpackungsfolien bei wesentlich geringeren Wandstärke die gleiche Festigkeit haben wie Folien beispielsweise aus verstrecktem Polyamid. Ein weiterer Vorteil von verstrecktem PET sind dessen im Vergleich zu Polyamid überlegene Sperreigenschaften gegenüber Wasserdampf und im Vergleich zu Polyolefinen besseren Sperreigenschaften gegenüber Sauerstoff.

Eine Polyester-Monofolie würde jedoch nicht alle Anforderungen abdecken, die an eine Nahrungsmittelhülle, insbesondere an eine künstliche Wursthülle gestellt werden. Eine wesentliche Anforderung ist eine starke Adhäsion (Haftung) der Hüllen-Innenseite zur eingefüllten Fleischmasse. Ungenügende Adhäsion äußert sich in einem "Aussaften" der Masse während des Garprozesses oder in der Bildung von Flüssigkeitsnestern direkt unter der Hülle. Eine ausreichende Adhäsion zum Fleisch liefern nach Stand der Technik nur Polymere mit sehr polaren funktionellen Gruppen, insbesondere Polyamide.

Sobald erhöhte Barriereanforderungen an die Hülle gestellt werden, reichen auch die Sperreigenschaften von PET-Monofolien nicht mehr aus. Gemäß dem eingangs zitierten Stand der Technik wurden daher PET-Schichten mit zusätzlichen Schichten kombiniert, die speziell eine Wasserdampf und/oder. Sauerstoff-sperrende Wirkung haben.

Mehrschichtige Strukturen mit Schichten aus Polyester sowie anderen Werkstoffen werden bis heute überwiegend nach sequentiellen Verfahren hergestellt, d.h. eine Polyesterfolie wird durch nachträgliches Beschichten, Bedampfen, Laminieren oder Kaschieren mit anderen Schichten zusammengefügt bzw. kombiniert. Es versteht sich, daß diese Techniken zur Herstellung nahtloser Schläuche ungeeignet sind. In den eingangs genannten DE-A 102 27 580 und 102 54172 sind jedoch schlauchförmige Folien beschrieben. Es finden sich darin jedoch praktisch keine Angaben über die Art der Herstellung. Das weitgehende Fehlen mehrschichtig coextrudierter Schlauchfolien mit Schichten aus Polyestern kann auf zwei technische Schwierigkeiten zurückgeführt werden:

Zum einen erfordern PET und verwandte Copolyester Verarbeitungstemperaturen von mindestens 280°C. Bei der Coextrusion von Kunststoffen müssen die jeweiligen Schmelzeströme das gleiche Werkzeug, d.h. insbesondere die gleiche Düse, durchlaufen. Alle Kunststoffe werden also zumindest kurzzeitig auf etwa 280°C oder mehr erwärmt. Viele der typischen Coextrusions-Werkstoffe, insbesondere Olefin/Ester-Copolymere, sind jedoch für derartig hohe Temperaturen ungeeignet. Ihre Schmelzeviskositäten würden auf Werte sinken, die für die Coextrusion viel zu niedrig sind. Weiterhin bestünde die Gefahr, daß sich die Kunststoffe thermisch zersetzen.

Zum anderen ist die in einem Coextrudat erforderliche Selbsthaftung der Schichten aneinander im Fall von Polyesterschichten schwierig realisierbar. Üblicherweise werden bei der Coextrusion sogenannte Haftvermittler-Polymere eingesetzt, beispielsweise ein mit Maleinsäureanhydrid gepfropftes Polyethylen. Gegenüber Polyester zeigen sich diese Haftvermittler jedoch als wirkungslos. Einzig bestimmte estergruppenhaltige Olefin-Polymere (z.B. EVA-Copolymer) bilden eine gewisse (physikalische) Haftung zu Polyestern aus. Diese Polymere zeigen in der Praxis jedoch wieder die genannten Defizite; ihr Einsatz beschränkt sich daher bisher auf die Schmelzebeschichtung fertiger Polyesterfolien.

Im Zusammenhang mit der vorliegenden Erfindung wurde festgestellt, daß sich Polyester in einem Coextrusionsverfahren mit anderen Thermoplasten zu Mehrschichtfolien mit ausreichender Verbundhaftung und mit dem für Nahrungsmittelhüllen, insbesondere Wursthüllen, erforderlichen Eigenschaftsprofil kombinieren lassen, wenn für die Polyesterschicht ein Gemisch aus (mindestens) einem Polyester und etwa 15 bis 49 Gew.-%, bevorzugt 20 bis 40 Gew.-%, bezogen auf das Gesamtgewicht der Mischung, mindestens eines teilaromatischen (Co-)Polyamids eingesetzt wird. Das teilaromatische (Co-)Polyamid besteht aus Einheiten mindestens einer Dicarbonsäure und mindestens eines Diamins, wobei entweder mindestens ein Dicarbonsäure oder mindestens ein Diamin aromatischen Charakter hat, d.h. ein aromatisches π-Elektronensystem in einem carbocyclischen Ring oder anellierten Ringsystem aufweist. Besonders geeignet sind teilaromatische (Co-)Polyamide mit Einheiten aus Terephthalsäure, Isophthalsäure und/oder Naphthalindicarbonsäure sowie Einheiten aus aliphatischen und/oder cycloaliphatischen Diaminen, wie Tetramethylendiamin, Hexamethylendiamin oder Isophorondiamin, Geeignet sind daneben (Co-)Polyamide mit Einheiten aus aromatischen Diaminen, wiel1,3-Bis-aminomethyl-benzol oder 2,2-Bis-(4-amino-phenyl)-propan, und Einheiten aus aliphatischen oder cycloaliphatischen Dicarbonsäuren, wie Adipinsäure und/oder Sebacinsäure. Bei dem teilaromatischen Polyamid handelt es sich bevorzugt um PA6-I oder PA6-I/6-T. Die Coextrusion führt zu einem mindestens 5-schichtigen Verbund, worin die an die Polyester-haltige Schicht angrenzende(n) Schicht(en) vorzugsweise ebenfalls (Co-)Polyamid, bevorzugt teilaromatisches (Co-)Polyamid, enthalten. Das schlauchförmige Coextrudat wird über biaxiale Verstreckung in die endgültige Lebensmittelhülle überführt.

Neben mindestens einer Schicht, die im wesentlichen aus PET und teilaromatischem Polyamid besteht, weist die erfindungsgemäße Hülle in einer bevorzugten Ausführungsform mindestens eine Schicht auf Basis von aliphatischem (Co-)Polyamid auf. Bevorzugte aliphatische (Co-)Polyamide sind Polycaprolactam (PA6), PA6/66, PA6/12 sowie Mischungen aus mehreren der Polyamide.

Anstelle von Schichten auf Basis von aliphatischen (Co-)Polyamiden - oder auch zusätzlich dazu - kann die erfindungsgemäße Hülle noch eine oder mehrere Schichten mit teilaromatischem (Co-)Polyamid enthalten. Diese Schichten können neben dem teilaromatischen (Co-)Polyamid noch aliphatische (Co-)Polyamide enthalten, beispielsweise solche der vorgenannten Art. Der Anteil an teilaromatischem (Co-)Polyamid oder der Mischung aus verschiedenen teilaromatischen (Co-)Polyamiden beträgt allgemein 25 bis 90 Gew.-%, bevorzugt 30 bis 80 Gew.-%, jeweils bezogen auf das Gewicht der betreffenden Schicht.

In einer bevorzugten Ausführüngsform enthält die erfindungsgemäße Hülle mindestens eine Schicht auf Basis von Polyolefin. Insbesondere umfaßt diese Schicht Homo- Co- oder Terpolymere mit Propylen-Einheiten, wie ataktisches, isotaktisches oder syndiotaktisches Homo-Polypropylen, Ethylen/Propylen-Copolymere, Ethylen/Propylen/Buten-Terpolymere sowie Gemische aus mehreren entsprechenden Polymeren (nachfolgend insgesamt bezeichnet als "PP").

Polyamide haben einen polaren Charakter, während Polyolefine unpolar sind. Als Folge davon haften Schichten aus den genannten Materialien sehr schlecht aneinander. Zwischen einer überwiegend oder vollständig aus (Co-)Polyamid ("PA") bestehenden Schicht und einer Polyolefinschicht befindet sind daher zweckmäßig eine Haftvermittlerschicht (HV-Schicht). Die Schicht kann mit 2 bis 6 µm relativ dünn sein. Gut geeignete Haftvermittler sind mit polaren Gruppen modifizierte Polyolefine. Die Polyolefine wiederum können Homo-, Co- oder Terpolymere sein. Solche modifizierten Polyolefine sind beispielsweise Ethylen/α-Olefin-Copolymere oder Propylenla-Olefin-Copolymere, die jeweils gepfropft sind mit dem Anhydrid einer α,β-ungesättigten Dicarbonsäure, wie Maleinsäureanhydrid, daneben auch Ethylen/(Meth)acrylsäure-Copolymere und deren Na-oder Zn-Salze, die auch unter der Bezeichnung "Ionomere" bekannt sind.

Jede der vorgenannten Schichten, insbesondere solche auf Basis von PA, HV oder PP, kann organische und/oder anorganische Additive enthalten. Das sind beispielsweise weitere Polymere, Weichmacher, Gleitmittel, Stabilisatoren sowie Antiblock- und Farbpigmente, Mattierungsmittel und/oder UV-Absorber.

Die erfindungsgemäße Nahrungsmittelhülle weist eine Wanddicke von insgesamt etwa 20 bis 65 µm, bevorzugt etwa 25 bis 45 µm auf. Sie umfaßt dabei mindestens 5 Schichten, bevorzugt mindestens 6 Schichten, besonders bevorzugt mindestens 7 Schichten. Nach oben hin ist die Zahl der Schichten theoretisch nicht begrenzt, aus praktischen Gründen besteht die Folie jedoch allgemein aus nicht mehr als 12 einzelnen Schichten, einschließlich etwaiger Haftschichten. Denn mit zunehmender Zahl der Schichten gestaltet sich die Geometrie der Coextrusions-Ringdüse immer komplizierter und technisch aufwendiger. Um die Zahl der Extruder zu minimieren, enthält die Hülle zweckmäßig 2 oder mehr Schichten von jeweils gleicher Zusammensetzung. Die Einzelschichten besitzen vorzugsweise folgende Dicken:
- (PET + teilar. PA):: 5 bis 40 µm, wobei der Anteil an der Gesamtdicke der Hülle bevorzugt etwa 20 bis 60% beträgt (die Abkürzung "PET" soll dabei neben Polyethylenterephthalat auch noch die weiteren genannten Polyester umfassen)
- teilar. PA:: etwa 2 bis 20 µm
- PA: etwa 8 bis 35 µm, wobei der Anteil der PA-Schicht(en) an der Gesamtdicke der Hülle bevorzugt etwa 20 bis 55 % beträgt
- HV: etwa 2 bis 20 µm
- PP: etwa 5 bis 15 µm, wobei der Anteil an der Gesamtdicke der Folie maximal etwa 25% beträgt

Bevorzugte Ausführungsformen besitzen Schichtstrukturen wie folgt:
   (Abfolge von der Außenseite zur Innenseite der Hülle):
      A) (PET + teilar.PA) // teilar.PA // PA // HV // PA (5 Schichten)
      B) (PET + teilar.PA) // teilar.PA // PA /*l* HV // PP /*l* HV /*l* PA (7 Schichten)
      C) PA // teilar.PA // (PET + teilar.PA) // teilar.PA // PA // HV // PA (7 Schichten).
      D) PA // teilar.PA // (PET + teilar.PA) // teilar.PA // HV // PP // HV // PA (8 Schichten)
      E) PA // teilar.PA // (PET + teilar.PA) // teilar.PA // PA // HV // PP // HV // PA (9 Schichten)

Die vorstehenden Symbole repräsentieren Schichten, die überwiegend aus folgenden Polymeren bestehen:
- PET:: Homo- oder Copolyester auf Basis mindestens einer aromatischen Dicarbonsäure, insbesondere Terephthalsäure, Isophthalsäure, Cyclohexandicarbonsäure, und mindestens eines Glykols, insbesondere Ethylenglykol 1,2-Propandiol, 1,4-Butandiol, Diethylenglykol, Polyethylenglykol, sowie Gemische aus mehreren entsprechenden Polyestern
- teilar.PA:: teilaromatisches Homo- oder Copolyamid auf Basis mindestens einer Dicarbonsäure und mindestens eines Diamins, dadurch gekennzeichnet, daß ein aromatischer Charakter entweder bei der/den Dicarbonsäure(n) (Beispiele: Terephthalsäure, Isophthalsäure, Naphthalindicarbonsäure) oder bei dem/den Diamin(en) (Beispiele: 1,3-Bisaminomethyl-benzol, 2,2-Bis-(4-amino-phenyl)-propan) vorliegt und daß die jeweils komplementäre(n) Monomerkomponente(n) aliphatischer Natur sind (aliphatische Diamine sind beispielsweise 1,6-Diaminohexan oder Isophorondiamin; aliphatische Dicarbonsäuren sind beispielsweise Adipinsäure oder Sebazinsäure)
- PA:: aliphatisches Homo- oder Copolyamid (z.B. PA6, PA6/66, PA6/12) oder Mischungen aus mehreren entsprechenden Polyamiden
- HV:: mit polaren Gruppen modifiziertes Olefin-Homo-, Co- oder Terpolymer, welches Haftung zu angrenzenden Schichten aus Polyamiden und gegebenenfalls auch aus Polyolefin ausbilden kann (Beispiele: Ethylen/α-Olefin-Copolymere oder Propylen/α-Olefin-Copolymere, diese gepfropft mit dem Anhydrid einer α,β-ungesättigten Dicarbonsäure [speziell Maleinsäureanhydrid), Ethylen-(Meth)acrylsäure-Copolymere und deren Na-oder Zn-Salze sowie Polymere mit mehreren der vorgenannten Bausteine)
- PP:: Homo-, Co- oder Terpolymer mit Propylen-Einheiten und gegebenenfalls Einheiten von weiteren α-Olefinen (z.B. ataktisches, isotaktisches oder syndiotaktisches Homo-Polypropylen, Ethylen/Propylen-Copolymere, "Ethylen/Propylen/ Buten-Terpolymere) sowie Gemische aus mehreren entsprechenden Polymeren

Unter den vorstehenden Schichtstrukturen sind (B) und (D) besonders bevorzugt.. Speziell bevorzugt sind die Strukturen (B) und (D) mit folgender prozentualer Aufteilung der Schichtdicken:
(B) 25-40% // 5-8% // 20-40% // 3-7% // 10-20% // 3-7% // 7-15%
(D) 15-30% // 5-8% // 25-40% // 5-8% // 3-7% // 10-20% // 3-7%1/7-15%

Die Herstellung der erfindungsgemäßen Schlauchfolie bzw. Hülle erfolgt durch thermoplastische Coextrusion und nachfolgende biaxiale Schlauchstreckung nach an sich bekanntem Verfahren. Dabei werden die für jede Schicht vorgesehenen Kunststoffe oder Kunststoffabmischungen bereitgestellt und in separaten Extrudern aufgeschmolzen und plastifiziert sowie anschließend in einer beheizten Ringdüse zusammengeführt. Die Temperatur der Ringdüse kann einheitlich auf die Erfordernisse des polyesterhaltigen Schmelze, d.h. auf ca. 270 bis 300°C eingestellt werden. Die anderen erfindungsgemäßen Schichtwerkstoffe sind bei richtiger Typauswahl geeignet, um die Düse in diesem Temperaturbereich unzersetzt sowie mit ausreichend hoher Viskosität zu durchlaufen und dabei die erforderliche Haftung zwischen den Schichten auszubilden.

Der aus der Düse austretende ringförmige Schmelzefilm wird durch schnelles Abkühlen zu einem amorphen Vorschlauch verfestigt und dieser durch anschließendes Wiedererwärmen (typischerweise auf etwa 70 bis 120°C) und mit Hilfe eines zwischen zwei Quetschwalzenpaaren eingeschlossenen Luftpolsters biaxial verstreckt. Danach kann noch eine Thermofixierung erfolgen, indem der verstreckte Schlauch durch eine weitere Wärmezone geführt wird, wobei er gegebenenfals durch ein weiteres Luftpolster stabilisiert wird. Hierdurch läßt sich die thermische Schrumpfneigung auf praxistaugliche Werte erniedrigen, die in der Regel im Bereich von 5 bis 20% in Längs- und in Querrichtung liegen (bei der Bestimmung des Schrumpfes wird einer Probe von definierter Länge und Breite in 80°C warmem Wasser über eine Zeitspanne von 15 min erwärmt; anschließend wird bestimmt, um welchen Prozentsatz Länge und Breite der Probe angenommen haben). Das Verfahren ist in der Fachwelt gemeinhin als "Double-Bubble-Prozeß" bekannt.

Die efindungsgemäße Nahrungsmittelhülle kann in üblicher Weise weiterverarbeitet und konfektioniert werden, z.B. durch Verkranzen (die Hülle wird dabei in eine spiralförmige Form gebracht), Bedrucken und Aufstocken zu Raffraupen.

Die nachfolgenden Beispiele dienen zur Illustration der Erfindung. Prozente sind darin Gewichtsprozente, soweit nicht anders angegeben oder aus dem Zusammenhang unmittelbar ersichtlich.

### Ausgangsmaterialien

- PET:: Copolyester aus Ethylenglykol mit Terephthalsäure und Isophthalsäure (3% der Dicarbonsäure-Einheiten sind solche aus Isophthalsäure), mit einem Schmelzpunkt von ca. 260°C (bestimmt per DSC) und einer intrinsischen Visikosität von 0,83 (gemessen in Dichloressigsäure) [KoSa T-94 der Invista International S.a.r.L.]
- teilar. PA:: amorphes Copolyamid aus 1,6-Diaminohexan mit Terephthalsäure und Isophthalsäure (Verhältnis 30 : 70) und mit einer Glasübergangstemperatur von 130°C (bestimmt per DSC) [®Selar PA3426 der DuPont de Nemours & Co.]
- PA:: Polyamid 6 mit einer relativen Viskosität von 4 (gemessen in 96%iger Schwefelsäure) [®Ultramid B40 der BASF AG]
- HV:: statistisches Copolymer aus Propylen und einem kleinen Anteil Ethylen, gepfropft mit Maleinsäureanhydrid mit einem Schmelzpunkt von 143 °C (bestimmt per DSC) und einem Schmelzflußindex (MFI) von 3,2 g/10 min (gemessen mit 2,16 kg Last bei 230 °C) [®Admer AT 843E der Mitsui & Co]
- PP:: statistisches Copolymer aus Propylen und einem kleinen Anteil Ethylen mit einem Schmelzpunkt von 143 °C (bestimmt per DSC) und einem und einem Schmelzflußindex (MFI) von 1,8 g/10 min (gemessen mit 2,16 kg Last bei 230°C) [®Eltex P KL104 der BP Chemical Ltd.]
- PA-Ab:: Antiblock-Masterbatch aus Polyamid 6 mit 2 Gew.-% Calciumcarbonat [®Grilon XE3690 der EMS-Chemie AG]

### Zur Herstellung der Hüllen verwendete Maschinentechnik

Verwendet wurden Mehrschicht-Extrusionsanlagen nach dem Stand der Technik mit Rohrkalibriersystem, nachgeschalteter Streckzone zur biaxialen Blasenreckung und abschließender Thermofixierzone (sog. Double-Bubble-Anlagen). Für die Beispiele 1 und 2 wurde eine Anlage mit 7-Schicht-Ringdüse verwendet, wobei letztere durch 7 einzelne Extruder gespeist wurde. Die Extruder wurden je nach zugeführten Einsatzstoffen individuell temperiert, wohingegen die Düse einheitlich auf 275°C beheizt war.

Für Vergleichsbeispiel 1 gelangt eine analog konstruierte Anlage mit 5-Schicht-Düse und 5 Extrudern zum Einsatz. Die Düsentemperatur betrug 240°C. *Meßgrößen zur Charakterisierung von Proben aus den Beispielen*
- 5%-Dehnspannung (σ₅) und Reißspannung (σ_{R}) (jeweils N/mm²] bestimmt per Zug-Dehnungsmessung gemäß DIN 53455 an längs und quer ausgeschnittenen Probestreifen von 15 mm Breite und 50 mm Einspannlänge, welche vor der Messung 30 min in kaltes Wasser eingelegt worden waren.
- Wasserdampfdurchlässigkeit [g / m² d] bestimmt gemäß DIN 53122 an Probeausschnitten, wobei diese von der Innenseite her mit einer relativen Feuchte von 85% gegen 0% und bei einer Temperatur von 23°C beaufschlagt wurden.
- Sauerstoffdurchlässigkeit [cm³/m² d bar] bestimmt gemäß DIN 53380, Teil 3, an Probeausschnitten mit dem Gerät ®Oxtran der Fa. Mocon bei einer relativen Feuchte von 53 % und einer Temperatur von 23°C.

### Beispiele 1 und 2

In der ersten oben beschriebenen Extrusionsanlage wurden 7 separate Schmelzeströme generiert und diese in der auf 275°C temperierten Düse zusammengeführt. Aus der Düsenöffnung trat jeweils ein konstant fließender, gleichmäßig geformter Schmelzehals aus. Anzeichen für Fließinhomogenitäten aufgrund von Viskositätsunterschieden waren nicht erkennbar. Der Schmelzehals wurde jeweils visuell auf Anzeichen von thermischer Zersetzung inspiziert (etwaige Verfärbung der Schmelze, Blasenbildung, Geruchs- oder Rauchentwicklung). Es wurden keine entsprechenden Anzeichen wahrgenommen.

Der Schmelzehals wurde jeweils zu einem Vorschlauch von 28 mm Durchmesser verfestigt und letzterer mit Hilfe eines eingeschlossenen Luftpolsters biaxial um einen Flächenfaktor von 12,2 verstreckt. Der so streckorientierte Schlauch wurde durch die nachfolgende Thermofixierzone geführt, sodann flachgelegt und aufgewickelt. Die resultierenden Hüllen hatten jeweils ein Kaliber von 100 mm und einen Schrumpf (gemessen nach 15 min Einlegen in 80°C warmes Wasser) von ca. 12% in Längsrichtung und ca. 15% in Querrichtung.

Die eingesetzten Kunststoffe bzw. -Gemische, deren Anordnung in der Hüllenstruktur sowie die Dicken sind den Tabellen 1 und 2 zu entnehmen.

**Tabelle 1: Schichtaufbau zu Beispiel 1**

| Schicht (1 = außen) | Zusammensetzung | Dicke der Einzelschicht | | Dicke der Gesamtstruktur |
|---|---|---|---|---|
| | [Gew.-%] | µm | % | µm |
| 1 | PET (70), teilar. PA (30) | 12 | 30 | 40 |
| 2 | teilar. PA (100) | 2,4 | 6 | |
| 3 | PA (100) | 10 | 25 | |
| 4 | HV (100) | 3,5 | 8,75 | |
| 5 | PP (100) | 5 | 12,5 | |
| 6 | HV (100) | 3,5 | 8,75 | |
| 7 | PA (90), teilar. PA (10) | 3.6 | 9 | |

**Tabelle 2: Schichtaufbau zu Beispiel 2**

| Schicht (1 = außen) | Zusammensetzung | Dicke der Einzelschicht | | Dicke der Gesamtstruktur |
|---|---|---|---|---|
| | [Gew.-%] | µm | % | µm |
| 1 | PA (95), PA-Ab (5) | 3,8 | 10 | 38 |
| 2 | teilar. PA (100) | 2,3 | 6,05 | |
| 3 | PET (70), teilar. PA (30) | 11,4 | 30 | |
| 4 | teilar. PA (100) | 2,3 | 6,05 | |
| 5 | PA (100) | 6 | 15,8 | |
| 6 | HV (50), PP (50) | 5,7 | 15 | |
| 7 | PA (90), teilar. PA (10) | 6,5 | 17,1 | |

### Vergleichsbeispiel V1

Mit der zweiten oben beschriebenen Extrusionsanlage wurden 5 separate Schmelzeströme generiert und in einer auf 240°C temperierten 5-Schicht-Düse zusammengeführt. Der aus der Düse austretende Schmelzehals wurde zu einem Vorschlauch von 32 mm Durchmesser verfestigt. Der Vorschlauch wurde biaxial um einen Flächenfaktor von 10,1 verstreckt. Anschließend wurde der Schlauch durch eine Thermofixierzone geführt, dann flachgelegt und aufgewickelt. Die resultierende Hülle hatte, wie im vorangehenden Beispiel, ein Kaliber von 100 mm. Der Schrumpf (gemessen nach 15 min Einlegen in 80°C warmes Wasser) betrug 13 % in Längsrichtung und 12 % in Querrichtung.

Die eingesetzten Kunststoffe bzw. -gemische, deren Anordnung in der Hüllenstruktur sowie die Dicken sind aus Tabelle 3 zu entnehmen.

**Tabelle 3: Schichtaufbau zu Vergleichsbeispiel V1**

| Schicht (1 = außen) | Zusammensetzung | Dicke der Einzelschicht | | Dicke der Gesamtstruktur |
|---|---|---|---|---|
| | [Gew.-%) | µm | % | µm |
| 1 | PA (95), PA-Ab (5) | 22 | 55 | 40 |
| 2 | HV (100) | 3,5 | 8,75 | |
| 3 | PP (100) | 5 | 12,5 | |
| 4 | HV (100) | 3,5 | 8,75 | |
| 5 | PA (90), teilar. PA (10) | 6 | 15 | |

### Vergleichsbeispiel V2

Hier wurde ein handelsüblicher Monoschlauch aus biaxial verstrecktem Polyethylenterephthalat mit einem Kaliber von 100 mm und einer Dicke von 20 µm herangezogen [Nalophan NA der Kalle GmbH].

Die aus den Beispielen ermittelten Meßwerte sind in Tabelle 4 aufgeführt.

Die Werte für 5%-Dehnspannung (σ₅) und Reißspannung (σ_{R}) zeigen die überlegene spezifische Festigkeit der erfindungsgemäßen Beispiele gegenüber dem der Stand der Technik gemäßen Vergleichsbeispiel V1 auf. Bei Wasserdampf- und Sauerstoffdurchlässigkeit ist die starke Unterlegenheit der Polyester-Monohülle (V2) gegenüber den erfindungsgemäßen Beispielen erkennbar.

**Tabelle 4: Prüfwerte der Hüllen gemäß Beispielen**

| Beispiel Nr. | σ₅ [N/mm²] | | σ_{R} [N/mm²] | | Wasserdampf-durchlässigkeit | Sauerstoff-durchlässigkeit |
|---|---|---|---|---|---|---|
| | längs | quer | längs | quer | [g/m²·d] | [g/m²·d bar] |
| 1 | 21,3 | 25,4 | 136 | 145 | 3,8 | 11,1 |
| 2 | 18,4 | 20,8 | 121 | 127 | 4,1 | 14,5 |
| V1 | 14,8 | 15,2 | 110 | 95 | 5,3 | 12,8 |
| V2 | 32,1 | 45,5 | 250 | 370 | 12,8 | 77 |

Zur weiteren Beurteilung der Hüllen aus den Beispielen wurden diese anwendungsbezogenen Tests unterworfen.

Dazu wurden Hüllenabschnitte außen und innen für 30 min gewässert und anschl. mit feinkörnigem Brühwurstbrät gefüllt (2,5 kg je Abschnitt). Sie wurden an den Enden mit Metallclips zu prallen Würsten verschlossen. Die Würste wurden hängend für 3 Stunden in einer Kochkammer auf ca. 80°C erhitzt, anschließend an der Luft abgekühlt und wie folgt beurteilt.
- Rückschrumpf: visuelle Beurteilung von Falten in der Hülle (1 = nur Falten im Kopfbereich, maximal 3cm lang, 5 = Zylinderbereich mit durchlaufenden Falten)
- Birnenverformung: durch Messung des Kalibers jeder Wurst nahe am unteren sowie nahe am oberen Kopfende, angegeben wird der Differenzwert
- Bräthaftung: hierfür wird jede Wurst quer durchgeschnitten und die Hüllenkante an einer der Stücke mit dem Messer eingekerbt. Von der Kerbe aus wird dann mit der Hand die Hülle spiralförmig abgeringelt. Eine gute Bräthaftung äußert sich darin, daß kleine Fleischpartikel gleichmäßig von der Wurst auf die Hüllenoberfläche übergegangen sind. Bei schlechter Haftung ist die Hüllenoberfläche frei von Partikeln und die Wurstoberfläche ist zonenweise bis vollflächig von geliertem Fleischsaft überzogen (sog. Geleeabsatz)
- Verbundhaftung während des Abringelns (siehe Test der Bräthaftung) werden die entstandenen Rißkanten der Hülle visuell auf Delamination des Schichtverbundes geprüft:
   1 = glatte Rißkante;
   5 = komplette Schichttrennung; Teil des Verbundes verbleibt vollständig auf der Wurstoberfläche)

Die entsprechenden Ergebnisse finden sich in Tabelle 5.

**Tabelle 5: anwendungstechnische Benotung der Hüllen gemäß Beispielen**

| Beispiel Nr. | Rückschrumpf (Noten 1-5) | Birnenverformung [mm] | Bräthaftung (Noten 1-5) | Verbundhaftung (Noten 1-5) |
|---|---|---|---|---|
| 1 | 1-2 | 1,5 | 2 | 1-2 |
| 2 | 1 | 2 | 2 | 1-2 |
| V1 | 2 | 6 | 2 | 1 |
| V2 | 5 | 0,5 | 4 | ./. |

Die schlechten Noten für Rückschrumpf und Bräthaftung zeigen deutlich die Unzulänglichkeit der Polyester-Monohülle V2 für Brühwurstanwendungen auf. Aus den Werten für die birnenförmige Verformung ist die bessere Formhaltung der erfindungsgemäßen Hüllen gegenüber dem Stand der Technik V1 bzw. deren überlegene spezifische Festigkeit unter Praxisbedingungen zu entnehmen. Die Noten für die Verbundhaftung legen dar, daß bei den erfindungsgemäßen Strukturen eine ausreichende Adhäsion insbesondere der polyesterhaltigen Schicht zu der/den angrenzenden Schicht(en) erreicht wurde.

## Patentansprüche

1. Biaxial orientierte, mindestens 5-schichtige Nahmngsmittelhülle mit mindestens einer Schicht auf Basis von Polyester, die **dadurch gekennzeichnet ist, daß** die Schicht auf Basis von Polyester 15 bis 49 Gew.-%. bezogen auf das Gewicht der Schicht, an teilaromatischem (Co-)Polyamid umfaßt und auf einer oder beiden Seiten an eine Schicht auf Basis von teilarorrtatischem (Co-)Polyamid angrenzt.

2. Nahrungsmittelhülle gemäß Anspruch 1, **dadurch gekennzeichnet, daß** sie schlauchförmig ist, bevorzugt nahtlos schlauchförmig.

3. Nahrungsmittelhülle gemäß Anspruch 1 oder 2, **dadurch gekennzeichnet, daß** die Schicht auf Basis von Polyester 20 bis 40 Gew.-% an teilaromatischem (Co-) Polyamid umfaßt, bezogen auf das Gewicht der Schicht.

4. Nahrungsmktelhülle gemäß einem oder mehreren der Ansprüche 1 bis 3, **dadurch gekennzeichnet, daß** das tellaramatische (Co-)Polyamid PA6-I oder PA6-I/6-T ist.

5. Nahrungsmittelhülle gemäß einem oder mehreren der Ansprüche 1 bis 4, **dadurch gekennzeichnet, daß** sie eine Wanddicke von 20 bis 65 µm, bevorzugt etwa 25 bis 45 µm, aufweist.

6. Nahrungsmittelhülle gemäß einem oder mehreren der Ansprüche 1 bis 5, **dadurch gekennzeichnet, daß** sie mindestens 5 Schichten, bevorzugt mindestens 6 Schichten, besonders bevorzugt mindestens 7 Schichten umfaßt.

7. Nahrungsmittelhülle gemäß einem oder mehreren der Ansprüche 1 bis 6, **dadurch gekennzeichnet, daß** sie mindestens eine Schicht auf Basis von Polyester mit einer Dicke von 5 bis 40 µm aufweist und der Anteil dieser Schicht(en) an der Wanddicke der Hülle 20 bis 60% ausmacht.

8. Nahrungsmittelhülle gemäß einem oder mehreren der Ansprüche 1 bis 7, **dadurch gekennzeichnet, daß** die Schichtabfolge von außen nach innen einer der folgenden Schemata entspricht
A) (PET + teilar.PA) // tellar.PA // PA // HV // PA
B) (PET + teilar.PA) // teilar.PA // PA // HV // PP // HV // PA
C) PA // teilar.PA // (PET + teilar.PA) // teilar.PA // PA // HV // PA
D) PA // teilar.PA // (PET + teilar.PA) // teilar.PA // HV // PP // HV // PA
E) PA // teilar.PA // (PET + teilar.PA) // teilar.PA // PA // HV // PP // HV // PA

9. Verfahren zur Herstellung der Nahrungsmittelhalle gemäß einem oder mehreren der Ansprüche 1 bis 8, **dadurch gekennzeichnet, daß** es folgende Schritte umfaßt
- Bereitstellen der für die einzelnen Schichten vorgesehenen Kunststoffe oder Kunststoffabmischungen,
- Aufschmelzen und Plastifizieren der Kunststoffe und/oder Kunststoffabmischungen in separaten Extrudern,
- Zusammenführen der Schmelzen aus den Kunststoffen und/oder Kunststoffabmischungen in einer beheizten Coextrusionsringdüse,
- Coextrudieren der einzelnen Schichten zu einem amorphen Vorschlauch,
- schnelles Abkühlen des Vorschlauchs,
- emeutes Erwärmen auf Verstrecktemperatur und biaxiales Verstrecken des Vorschlauchs mit Hilfe eines zwischen 2 Quetschwalzenpaaren eingeschlossenen Gaspolsters und
- gegebenenfalls teilweises oder vollständiges Thermofixieren des biaxial verstreckten Schlauchs in einer weiteren Wärmezone, sowie
- gegebenenfalls Konfeldionieren.

10. Verwendung der Nahrungsmittelholle gemäß einem oder mehreren der Ansprüche 1 bis 8 als künstliche Wursthülle, bevorzugt für Brüh- oder Kochwurst,

## Claims

1. A biaxially oriented, at least 5-layer food casing with at least one layer based on polyester, wherein the layer based on polyester comprises from 15 to 49 % by weight, based on the weight of the layer, of semiaromatic (co)polyamide, and, on one or both sides, adjoins a layer based on semiaromatic (co)polyamide.

2. The food casing as claimed in claim 1, which takes the form of a tube, preferably a seamless tube.

3. The food casing as claimed in claim 1 or 2, wherein the layer based on polyester comprises from 20 to 40 % by weight of semiaromatic (co)polyamide, based on the weight of the layer.

4. The food casing as claimed in one or more of claims 1 to 3, wherein the semiaromatic (co)polyamide is PA6-I or PA6-I/6-T.

5. The food casing as claimed in one or more of claims 1 to 4, the wall thickness of which is from 20 to 65 µm, preferably about 25 to 45 µm.

6. The food casing as claimed in one or more of claims 1 to 5, which comprises at least 5 layers, preferably at least 6 layers, particularly preferably at least 7 layers.

7. The food casing as claimed in one or more of claims 1 to 6, which has at least one layer based on polyester with a thickness of from 5 to 40 µm, where the proportion made up by said layer(s), based on the wall thickness of the casing, is from 20 to 60 %.

8. The food casing as claimed in one or more of claims 1 to 7, wherein the layer sequence from the outside to the inside corresponds to one of the following systems:
A) (PET + semiar. PA) // semiar. PA // PA // HV // PA
B) (PET + semiar. PA) // semiar. PA // PA // HV // PP // HV // PA
C) PA // semiar. PA // (PET + semiar. PA) // semiar. PA // PA // HV // PA
D) PA // semiar. PA // (PET + semiar. PA) // semiar. PA // HV // PP // HV // PA
E) PA // semiar. PA // (PET + semiar. PA) // semiar. PA // PA // HV // PP // HV // PA

9. A process for producing the food casing as claimed in one or more of claims 1 to 8, which comprises the following steps:
- providing the plastics or plastics blends intended for the individual layers,
- melting and plastifying the plastics and/or plastics blends in separate extruders,
- combining the melts made of the plastics and/or plastics blends in a heated annular coextrusion die,
- coextruding the individual layers to give an amorphous pre-tube,
- rapid cooling of the pre-tube,
- reheating to orientation temperature, and biaxial orientation, of the pre-tube with the aid of a gas cushion enclosed between 2 pairs of nip rolls, and
- optional partial or complete heat-setting of the biaxially oriented tube in a further heating zone, and also
- optional finishing.

10. The use of the food casing as claimed in one or more of claims 1 to 8 as synthetic sausage casing, preferably for scalded-emulsion sausage or cooked-meat sausage.

## Revendications

1. Enveloppe pour produits alimentaires orientée biaxialement et comprenant au moins 5 couches avec au moins une couche à base de polyester, qui est **caractérisée en ce que** la couche à base de polyester comprend 15 à 49 % en poids, par rapport au poids de la couche, de (co-)polyamide partiellement aromatique et jouxte sur un côté ou sur les deux une couche à base de (co-)polyamide partiellement aromatique.

2. Enveloppe pour produits alimentaires selon la revendication 1, **caractérisée en ce qu'**elle se présente sous une forme tubulaire, de préférence une forme tubulaire sans couture.

3. Enveloppe pour produits alimentaires selon la revendication 1 ou 2, **caractérisée en ce que** la couche à base de polyester comprend 20 à 40 % en poids d'un (co-)polyamide partiellement aromatique, par rapport au poids de la couche.

4. Enveloppe pour produits alimentaires selon l'une quelconque ou plusieurs des revendications 1 à 3, **caractérisée en ce que** le (co-)polyamide partiellement aromatique est le PA6-I ou le PA6-I/6-T.

5. Enveloppe pour produits alimentaires selon l'une quelconque ou plusieurs des revendications 1 à 4, **caractérisée en ce qu'**elle présente une épaisseur de paroi de 20 à 65 µm, de préférence d'environ 25 à 45 µm.

6. Enveloppe pour produits alimentaires selon l'une quelconque ou plusieurs des revendications 1 à 5, **caractérisée en ce qu'**elle comprend au moins 5 couches, de préférence au moins 6 couches, mieux encore au moins 7 couches.

7. Enveloppe pour produits alimentaires selon l'une quelconque ou plusieurs des revendications 1 à 6, **caractérisée en ce qu'**elle présente au moins une couche à base de polyester ayant une épaisseur de 5 à 40 µm et **en ce que** la proportion de cette/ces couche(s) par rapport à l'épaisseur de paroi de l'enveloppe constitue 20 à 60 %.

8. Enveloppe pour produits alimentaires selon l'une quelconque ou plusieurs des revendications 1 à 7, caractérisée ce que la succession de couches, de l'extérieur vers l'intérieur, correspond à l'un des schémas suivantes :
A) (PET + PA part. aromatique) // PA part. aromatique // PA // HV // PA
B) (PET + PA part. aromatique) // PA part. aromatique // PA // HV // PP // HV // PA
C) PA // PA part. aromatique // (PET + PA part. aromatique) // PA part. aromatique // PA // HV // PA
D) PA//PA part. aromatique// (PET + PA part. aromatique) // PA part. aromatique// HV// PP // HV // PA
E) PA // PA part. aromatique // (PET + PA part. aromatique) // PA part. aromatique // PA // HV // PP // HV // PA

9. Procédé de fabrication de l'enveloppe pour produits alimentaires selon l'une quelconque ou plusieurs des revendications 1 à 8, **caractérisé en ce qu'**il comprend les étapes suivantes consistant à :
- préparer les matériaux synthétiques ou les mélanges de matériaux synthétiques prévus pour les couches individuelles,
- faire fondre et plastifier les matériaux synthétiques et/ou les mélanges de matériaux synthétiques dans des extrudeuses séparées,
- réunir les masses fondues obtenues à partir des matériaux synthétiques et/ou des mélanges de matériaux synthétiques dans une filière de coextrusion annulaire chauffée,
- coextruder les couches individuelles sous la forme d'une ébauche de tube amorphe,
- refroidir rapidement l'ébauche de tube,
- chauffer à nouveau à une température d'étirage et étirer biaxialement l'ébauche de tube à l'aide d'un coussin de gaz enserré entre 2 paires de rouleaux exprimeurs et
- éventuellement effectuer une thermofixation partielle ou complète du tube étiré biaxialement dans une autre zone de traitement thermique, et
- éventuellement, procéder au façonnage.

10. Utilisation de l'enveloppe pour produits alimentaire selon l'une quelconque ou plusieurs des revendications 1 à 8, comme enveloppe de saucisse synthétique, de préférence pour une saucisse blanchie ou une saucisse à cuire.
